# EUROPÄISCHE PATENTSCHRIFT

(11) **EP 2 229 761 B1**
(45) Veröffentlichungstag und Bekanntmachung des Hinweises auf die Patenterteilung: **25.01.2017**
(21) Anmeldenummer: 08858331.5
(22) Anmeldetag: 04.12.2008
(51) Int. Cl.: H04L 29/06, H04W 84/02

(54) **VERWENDUNG DES WLAN-STANDARDS FÜR EINE C2C-KOMMUNIKATION DURCH HINZUFÜGEN VON NEUEN PAKETTYPEN**
USE OF THE WLAN STANDARD FOR A C2C COMMUNICATION BY ADDING NEW PACKET TYPES
UTILISATION DE LA NORME WLAN POUR UNE COMMUNICATION C2C PAR AJOUT DE NOUVEAUX TYPES DE PAQUETS

(30) Priorität: 06.12.2007 DE 102007059023; 22.02.2008 DE 102008010668; 26.02.2008 DE 102008011196; 22.10.2008 DE 102008043055; 04.12.2008 DE 102008060231
(43) Veröffentlichungstag der Anmeldung: 22.09.2010
(73) Patentinhaber: Continental Teves AG & Co. oHG, 60488 Frankfurt (DE)
(72) Erfinder: STÄHLIN, Ulrich, 65670 Eschborn (DE); GROTENDORST, Thomas, 65760 Eschborn (DE); BIRKE, Carsten, 60433 Frankfurt Am Main (DE); MENZEL, Marc, 35043 Marburg (DE); SCHERPING, Richard, 44227 Dortmund (DE)
(74) Vertreter: Bonn, Roman Klemens
(86) Internationale Anmeldenummer: PCT/EP2008/066814
(87) Internationale Veröffentlichungsnummer: WO 2009/071632

(56) Entgegenhaltungen:
- EP-A- 1 286 506
- US-A1- 2007 021 133
- US-A1- 2007 252 723
- US-B1- 6 865 609

## Beschreibung

### Gebiet der Erfindung

Die vorliegende Erfindung betrifft Verfahren und Vorrichtungen zum Selektieren von über eine WLAN-Verbindung übertragenen Daten.

### Technologischer Hintergrund

Die im folgenden diskutierte Car-to-Car Communication (C2C-Communication = Kraftfahrzeug-zu-Kraftfahrzeug-Kommunikation) ist ein vom Car-to-Car-Communication-Konsortium (C2C-CC), einem Zusammenschluss mehrerer Automobilhersteller, definierter Begriff. C2C-CC erarbeitet für die Fahrzeug-zu-Fahrzeug-Kommunikation und für die Kommunikation der Fahrzeuge mit Infrastruktur-Einrichtungen (Ampeln, etc.) einen offenen Industriestandard.

Basis für solche Car-to-Car-Funksysteme können drahtlose Kommunikationssysteme in Form von WLANs (Wireless Local Area Networks) gemäß beispielsweise dem von der IEEE unter der Standardbezeichnung 802.11 definierten Standard sein (s. z.B.: IT-Wissen, Das große Onlinelexikon für Informationstechnologie).

C2X-Kommunikation umfasst C2C-Kommunikation (Fahrzeug-zu-Fahrzeug-Kommunikation) und Kommunikation zwischen einem Fahrzeug und einer weiteren Einrichtung, die kein Fahrzeug ist, wie beispielsweise einer Infrastruktureinrichtung (Ampel, etc.).

Für eine Fahrzeug- zu- X-Kommunikation (C2X-Kommunikation) wäre eine WLAN- Implementierung nach dem allerdings noch nicht freigegebenen Standard 802.11p vorstellbar. Diese Unterform des WLAN- Standards 802.11 zeichnet sich durch die Möglichkeit einer Ad-hoc-Kommunikation und hohe Reichweiten aus. Ad-hoc-Kommunikation ist ein Modus, bei dem spontan (ad hoc) mindestens zwei Teilnehmer (Funkeinrichtungen beispielsweise in Fahrzeugen) miteinander kommunizieren, wobei eine Kommunikation auch von einem Teilnehmer über mehrere die Kommunikation als Zwischenstationen weiterleitende Teilnehmer zu einem Endziel erfolgen kann. Neben der ad-hoc-Modus-Kommunikation kennt WLAN auch einen Infrastrukturmodus, welcher mit Hilfe von Basisstationen (Access-Point) arbeitet. Handelsübliche WLAN-Router haben mit dem derzeit verwendeten Funkstandard nach IEEE / 802.11a/b/g/n den Nachteil, dass sie relativ lange Aufbauzeiten für die Kommunikation benötigen (Kanalaufbau-Latenzzeiten), was die Einsetzbarkeit reduziert. Jedoch weisen die genannten Standards 802.11a/b/g/n deutlich höhere Datenraten auf als 802.11p, was sie wiederum für Multimedia-Anwendungen interessant macht.

Das Dokument US2007/0252723 beschreibt ein dynamisches Fahrzeugverbundsystem, das dem Fahrer ermöglicht, automatisch über die Zustände der in der Umgebung befindliche Fahrzeuge zu informieren. Eine Warnung wird an alle im Umfeld befindlichen Fahrzeuge gesendet.

### Zusammenfassung der Erfindung

Aufgabe der vorliegenden Erfindung ist es, unter Vermeidung der genannten Nachteile eine effiziente C2X-Kommunikation zu ermöglichen, beispielsweise zum Fußgängerschutz. Die Aufgabe wird jeweils durch die Gegenstände der unabhängigen Patentansprüche gelöst.

Die Erfindung erlaubt eine Verwendung von 802.11-WLAN-Übertragungsverfahren (insbesondere 802.11a oder 802.11b oder 802.11g oder 802.11n) unter Einsatz handelsüblicher WLAN-Funktechnik sowohl für eine C2X-Kommunikation wie auch für eine Kommunikation anderer Inhalte (beispielsweise für eine Internet/http/etc. Kommunikation, im Internet "surfen" etc) unter Einsatz derselben WLAN-Funktechnik-Geräte im Kraftfahrzeug. Dabei können die sehr gute Reichweite und die relativ kurzen Verbindungsaufbauzeiten von vorhandenen WLAN-Standards wie 802.11a/b/g/n effizient genutzt werden.

Eine bedeutende Implementierung der Erfindung ist dabei die Erweiterung des MAC-Layers des WLAN-Standards 802.11 (beispielsweise 802.11 a/b/g/n), um einen (für die erfindungsgemäße C2X-Kommunikation verwendbaren) Datenpakettyp (beispielsweise Frame- Typ 3 oder Frame- Typ 2 mit einem der (MAC-Layer-Header-) Frame- Subtypen 8 bis 15 (die noch nicht verwendet werden), der von bestehenden WLAN-Implementierungen ignoriert wird, der aber modifizierten Implementierungen den Aufbau einer effektiven C2X-Kommunikation parallel (also beispielsweise gleichzeitig und/oder über dasselbe WLAN-Kommunikations-Endgerät) zu sonstiger WLAN-Kommunikation (z.B. Benutzung des Internets) ermöglicht.

Gemäß den Patentansprüchen betrifft die Erfindung ein Verfahren zum Filtern von über eine WLAN-Verbindung an einen Empfänger in einem Kraftfahrzeug übertragenen Daten, wobei von einer Filtereinrichtung (beispielsweise einem erweiterten MAC-Software-Treiber) anhand zumindest des in einem Daten-Frame enthaltenen Frame-Typs (z.B. "3"; oder "2" mit Subtypen) entschieden wird, an welche Einrichtung (C2X-Daten verarbeitende Einrichtung oder http-Daten verarbeitende Einrichtung) der jeweilige Daten-Frame übergeben wird.

Dabei kann anhand des Frame-Typs eines Daten-Frames entschieden werden, ob der Daten-Frame an eine C2X-Einrichtung oder an eine andere (Fahrzeug-seitige) Einrichtung (beispielsweise http oder Internet-Daten weiterverarbeitende Einrichtung (z.B. Internet-Browser)) übergeben werden.

Die Entscheidung, an welche Einrichtung die Daten- Frames übertragen werden, kann auf einem Frame-Typ ("3") oder auch auf einer Kombination aus einem Frame-Typ und einem bestimmten (MAC-Layer-Header-) Frame- Subtyp (für den Frame-Typ "2" einer der (MAC-Layer-Header-)Frame- Subtypen "8", "9", "10", "11", "12", "13", "14", "15") beruhen.

Die Daten können insbesondere mit einem 802.11a- oder b- oder g- oder n-Standard übertragen werden.

Gemäß einem Ausführungsbeispiel der Erfindung werden die Daten von einer mobilen Sendeeinrichtung eines Fußgängers an den Empfänger, der sich in dem Fahrzeug befindet, gesendet, wobei die Daten dann zur Erzeugung eines Warnsignals in dem Fahrzeug verwendet werden.

Das Warnsignal kann sich direkt an den Fahrer richten, beispielsweise in Form eines akustischen Signals und/oder eines optischen Signals und/oder eines haptischen Signals (z.B. in Form einer Lenkradvibration). Auch kann das Warnsignal an eine Sicherheitseinrichtung des Fahrzeugs, wie beispielsweise ein Fahrerassistenzsystem, weitergegeben werden, welches dann entsprechende Schritte einleitet.

An dieser Stelle sei darauf hingewiesen, dass die Kommunikation zwischen den unterschiedlichen Einheiten innerhalb des Fahrzeugs drahtgebunden oder drahtlos erfolgen kann. So kann beispielsweise in einer Ausführungsform der Erfindung das Fahrerassistenzsystem drahtlos mit dem Kommunikationssystem im Fahrzeug kommunizieren, falls gewünscht.

Bei der mobilen Sendeeinrichtung des Fußgängers handelt es sich beispielsweise um ein Mobiltelefon.

Gemäß einem weiteren Ausführungsbeispiel der Erfindung werden die Daten zusätzlich auch auf Basis einer weiteren Kommunikationstechnik von dem Empfänger im Fahrzeug empfangen. Beispielsweise werden die Daten gleichzeitig (redundant) auf Basis des WLAN-802.11p-Standards und auf Basis des WLAN-802.11a- oder b- oder g- oder n-Standards übertragen.

Die beiden parallelen Übertragungswege können sowohl gleichzeitig genutzt werden als auch wahlweise zu- oder abgeschaltet werden.

Neben einer Filterung von empfangenen Daten betrifft die Erfindung auch ein Verfahren zum Senden von Daten-Frames über eine seitens eines Kraftfahrzeugs installierte Datenverbindung, wobei Daten von einer C2X-Einrichtung (beispielsweise einem C2X-Controller-Modul im Fahrzeug) mit einer Frame-Typ-Kennzeichnung (Typ 2 mit Subtypen 8 bis 15 oder Typ 3 etc) versehen werden, während von anderen Fahrzeug-seitigen Einrichtungen (http/Internet/Multimedia-Daten verarbeitende Einrichtungen) kommende, zu versendende Daten mit einer anderen Frame-Typ-Kennzeichnung versehen werden.

Gemäß einem weiteren Ausführungsbeispiel der Erfindung handelt es sich bei dem Empfänger um eine mobile Sendeeinrichtung eines Fußgängers, wobei die Daten Informationen über die augenblickliche Position des Fahrzeugs aufweisen.

Gemäß einem weiteren Ausführungsbeispiel der Erfindung werden die Daten zusätzlich auch auf Basis einer weiteren Kommunikationstechnik an den Empfänger gesendet.

Gemäß einem weiteren Ausführungsbeispiel der Erfindung basiert die weitere Kommunikationstechnik auf dem WLAN-802.11p-Standard.

Ferner betrifft die Erfindung eine Empfangseinrichtung für eine Fahrzeug- seitige Implementierung mit einer Filtereinrichtung zum Entscheiden über die Weiterleitung von empfangenen Daten- Frames an eine C2X-Einrichtung (C2X) oder andere Einrichtung (http/Internet-Browser/Multimedia etc.) anhand von im MAC- Layer-Header des Daten- Frames angegebenen Typs ("3"; "2" mit bestimmten Subtypen).

Die Erfindung betrifft ferner eine Sendeeinrichtung zur Implementierung in einem Fahrzeug und zum Senden von Daten-Frames, mit einer Kennzeichnungseinrichtung zum Kennzeichnen (vor dem Versenden) von von einer C2X-Einrichtung stammenden Datenpaketen mit (nur oder zumindest) einem Frame-Typ ("2" mit Subtyp 8 bis 15 oder "3") und zum Kennzeichnen von von einer anderen Fahrzeug-seitigen Einrichtung stammenden (Internet/http/Multimedia etc.) Datenpaketen mit einem anderen Frame-Typ.

Die Erfindung betrifft ferner ein Kommunikationssystem für ein Fahrzeug mit einer oben beschriebenen Empfangseinrichtung und einer oben beschriebenen Sendeeinrichtung zum Durchführen der oben beschriebenen Verfahren.

Weitere Merkmale und Vorteile der Erfindung ergeben sich aus den Patentansprüchen und der nachfolgenden Beschreibung eines Ausführungsbeispiels anhand der Zeichnung.

### Kurze Beschreibung der Figuren

Fig. 1 zeigt schematisch das Versenden und den Empfang von Datenpaketen seitens eines Fahrzeugs über eine WLAN-Verbindung unter Berücksichtigung von Frame-Typen.
Fig. 2 zeigt ein Fahrzeug mit einem Kommunikationssystem sowie ein fahrzeugexternes mobiles Kommunikationsgerät gemäß einem Ausführungsbeispiel der Erfindung.
Fig. 3 zeigt eine redundante Datenübermittlung zwischen einem Kommunikationssystem eines Fahrzeugs und einem mobilen Kommunikationsgerät gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Der 802.11 Standard definiert im Wesentlichen zwei Schichten/Layers:
- Der physical layer definiert das physikalische Transportmedium (Frequenz, Modulation ...) und den rudimentären Transport von Datenbytes.
- Der MAC- layer ist auf etwas höherer Ebene für Datensicherung, Datenflusssteuerung und Teilnehmerverwaltung zuständig, was unter anderem durch verschiedene Typen von Datenpaketen/Frames geschieht (ein Daten-Frame kann ein Datenpaket sein, beispielsweise ein Datagramm auf Schicht 2 des OSI-Modells). Damit ermöglicht es der MAC-Layer unter anderem, Datenpakete sicher über WLAN zu definierten Empfangsstationen (beispielsweise in einem Fahrzeug) zu transportieren.

Aus höheren Schichten (des OSI- Standard- Modells) stammende Daten (beispielsweise aus http-basierten Anwendungen stammende Daten) werden von einer MAC-Layer-Einrichtung in einen Frame verpackt, der einen Header, die eigentlichen Daten (Nutzdaten) und eine Frame-Check-Sequenz umfasst. Der Header wiederum beinhaltet unter anderem ein Feld "Frame Control" (35), das wiederum den Typ des Frames (zum Beispiel Daten-Frame oder Control-Frame) und den Subtyp des Frames enthält. Dieser Aufbau ist für alle 802.11 MAC-Frames gleich.

Der Standard 802.11 hat für einige Typen und Subtypen von Frames noch keine Anwendungen definiert, so dass diese für zukünftige Erweiterungen frei sind und solche Typen und Subtypen von aktuellen Implementierungen (http/Internet-Browser, Multimedia, etc.) ignoriert werden, so dass diese im Sinne dieser Erfindung verwendet werden können. Zum Beispiel könnte die allgemeine Typnummer 3 zur Kennzeichnung von C2X-Kommunikation betreffenden Daten-Frames verwendet werden oder es könnten (für einen Frame mit der Frame- Typ-Nr. 2) die Subtypen 8 bis 15 eines Daten-Frames zur Kennzeichnung von Fahrzeug-zu-X (C2X-Kommunikation) betreffenden Daten-Frames und damit zum Ermöglichen einer Selektion dieser Frames für C2X-Anwendungen/ Einrichtungen verwendet werden.

Für die Implementierung kann ein MAC-Software-Treiber verwendet werden. Ein derartiger erweiterter MAC-Software-Treiber könnte nun Frames oder entsprechend alle Pakete mit der entsprechenden C2X-Typ-Kennung aus dem Paketstrom, den er von einem Physical Layer bekommt, herausfiltern und direkt an ein C2X-Controller-Modul weitergeben (beispielsweise über eine Software-Schnittstelle oder Ethernet, etc.) und Pakete, die von einem C2X-Controller kommen, in entsprechend aufgebaute Frames verpacken und an den Physical Layer zum weiteren Versenden weitergeben. Damit wäre die normale MAC-Zugangsregelung oder der zwar sichere, aber dafür langwierige Verbindungsaufbau für C2X-Frames umgangen. Das C2X-Controller-Modul könnte anhand von Mechanismen/Algorithmen wie beispielsweise den bei NOW (Network On Wheel) entwickelten eine C2X-Kommunikation aufbauen - mit C2X-spezifischen Funktionen wie zum Beispiel geographischem Routing. Andere Quellen für Mechanismen/Algorithmen sind das C2C-CC und die IEEE 1609. Für einfache Funktionen, wie zum Beispiel die Warnung vor Rettungsfahrzeugen mittels eines Broadcast sind diese Mechanismen/Algorithmen jedoch nicht notwendig. Indem ein bereits vorhandenes Feld für die Typerkennung in den MAC-Paketen für die Erweiterung verwendet wird, würde mit einem so modifizierten Router weiterhin auch eine andere Kommunikation (zum Beispiel http/Internet/Multimedia-Kommunikation) möglich sein. C2X-Kommunikation wäre ein einfaches Software-Add-On für handelsübliche WLAN-Router. Beim Einbau von WLAN-Funktechnik in Fahrzeuge könnte hierdurch die dann vorhandene Hardware nur durch Änderung der Software auch schon für C2X-Kommunikation verwendet werden.

Als Router kann dabei herkömmliche Hardware verwendet werden. Durch die immer größere Verbreitung von mobilen Geräten mit WLAN ist es jedoch auch möglich, diese zum Beispiel mit Bluetooth an Fahrzeug-seitige Geräte zu koppeln und dann das WLAN der mobilen Geräte als Router zu verwenden.

Bisherige Ansätze, C2X-Kommunikation mit handelsüblichen WLAN-Routern mit handelsüblichen Ethernet-Protokollen darzustellen (UDP) ohne parallel sonstige (zum Beispiel http/Internet/Multimedia) Kommunikation, oder die alternative Verwendung von auf C2X spezifizierten Routern (zum Beispiel beim NOW Network On Wheels-Ansatz) erzielen nicht die erfindungsgemäßen Vorteile.

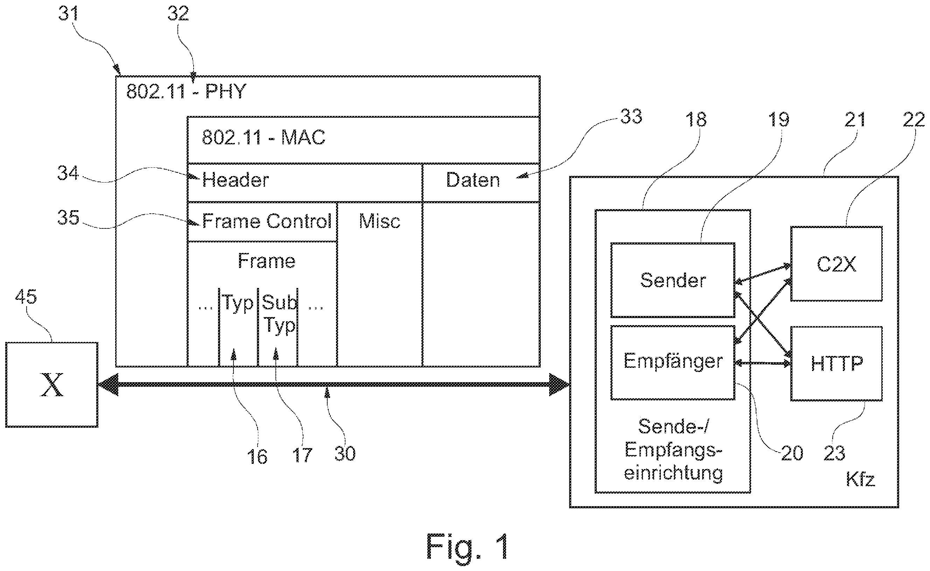

Fig. 1 zeigt schematisch einen Daten-Frame 31 mit einem physcial layer nach 802.11-PHY (Bezugszeichen 32), einem MAC-layer nach 802.11-MAC mit Nutz-Daten 33 und einem Header 34, welcher Header 34 einen Frame- Control- Datensatz 35 enthält, der) den Frame- Typ 16 (beispielsweise Typnummer "2" oder Typnummer "3") und eine Angabe des Subtyps (beispielsweise "8" bis "15") mit dem Bezugszeichen 17 sowie sonstige Angaben ("...") enthält. Der Datensatz (Frame etc. "1") wird von einer Sende-/Empfangseinrichtung 18 (mit einem Sender 19 und einem Empfänger 20) die in einem Kraftfahrzeug 21 angeordnet oder montiert ist, gesendet oder empfangen.

Wenn ein Daten-Frame 31 von einer Sender/Empfangseinrichtung 18 seitens des Fahrzeugs 21 empfangen wird, wird anhand des in dem Daten-Frame 31 angegebenen Datentyps 16 alleine -oder aufgrund des im Daten-Frame 31 angegebenen Datentyps 16 ("2") und eines im Daten-Frame 31 angegebenen Subtyps 17 ("8", "9", "10" ... "15")- entschieden, ob der Daten-Frame an eine C2X-Einrichtung 22 (die beispielsweise Daten betreffend ankommende Rettungsfahrzeuge oder eine in Fahrtrichtung befindliche Ampel mit bestimmter Ampelphase bearbeiten / anzeigen) oder an eine sonstige Kommunikationseinrichtung 23 (z.B. zum surfen im Internet) übergeben werden. Entsprechend werden von der C2X-Einrichtung 22 kommende Daten vom Sender 19 mit einer Angabe 16 eines die C2X-Kommunikation repräsentierenden Frame-Typs ("2") -oder mit einer Angabe 16 eines Frame-Typs ("3") und einer Angabe 17 eines Frame- Subtyps ("8" bis "15")- versehen und über eine Luftschnittstelle 30 (also über die Luft per Funk) an einen Empfänger 45 (in einem Fahrzeug oder in einer Infrastruktureinrichtung) übermittelt und dort empfangen und weiterverarbeitet.

An dieser Stelle sei angemerkt, dass die Datenübertragung zwischen den einzelnen Komponenten sowohl kabelgebunden als auch kabellos erfolgen kann.

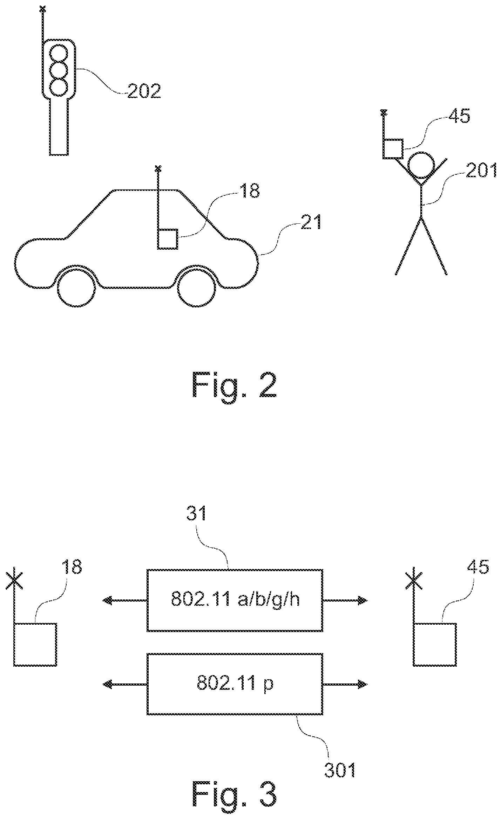

Fig. 2 zeigt ein Kommunikationssystem 18, das in einem Fahrzeug 21 integriert ist sowie einen Fußgänger 201, der ein mobiles Kommunikationsgerät 45 hält. Das mobile Kommunikationsgerät 45 wird im Kontext der vorliegenden Erfindung auch als Sender 45 oder Empfänger 45 bezeichnet.

Bei dem mobilen Kommunikationsgerät 45 handelt es sich beispielsweise um ein modernes Mobiltelefon, welches ein WLAN-Modul und ggf. auch ein Positionsbestimmungsmodul oder Navigationsmodul (z. B. GPS-Modul) aufweist.

Das WLAN-Modul ist bezüglich der Sicherheitstechnik erweitert, beispielsweise indem der MAC-Layer wie oben beschrieben modifiziert wurde.

Auch kann das WLAN-Modul bezüglich der Sicherheitstechnik wie folgt erweitert werden: In den Datenstrom der WLAN-Verbindung (beispielsweise auf Basis von WLAN 802.11a/b/g Standard und die beispielsweise für Infotainment-Anwendungen genutzt wird) werden Zeitslots eingefügt, über welche die Kommunikation für Sicherheitsanwendungen durchgeführt werden kann. Die Synchronisation dieser Zeitslots erfolgt zum Beispiel über die GPS-Zeit, die in jedem Fahrzeug exakt gleich ist. Während dieser Zeitslots wird die Infotainment Kommunikation angehalten und anschließend fortgesetzt. Durch die Synchronisation mit der GPS-Zeit wird sichergestellt, dass sämtliche Fahrzeuge zur gleichen Zeit die Infotainment Kommunikation unterbrechen und auf Sicherheitsfunktionen umstellen.

Da dieses Erweiterungsverfahren nachträglich in einen bestehenden Standard eingefügt wird, braucht sie natürlich auch nicht von allen WLAN Geräten eingehalten werden. Die übertragene Information wird nicht für sicherheitsrelevante Eingriffe genutzt, sondern nur für eine verbesserte Fahrerinformation.

Detektiert das mobile Kommunikationsgerät 45 über diese Erweiterung nun die Anwesenheit eines Fahrzeugs, wird also ein sich in der Nähe des Fußgängers befindendes Fahrzeug detektiert (indem beispielsweise ein periodisch von dem Fahrzeug ausgesendetes Positionssignal empfangen und analysiert wird), so sendet das mobile Kommunikationsgerät 45 in periodischen Abständen oder einmalig seine Position. Diese Position wird z. B. über das integrierte GPS-Modul oder mittels WLAN-Ortung ermittelt.

Empfängt die Kommunikationseinrichtung des Fahrzeugs eine solche Botschaft, kann es den Fahrer vor dem Fußgänger warnen, falls sich dieser in einem kritischen Abstand zum Fahrzeug befindet. Zusätzlich ist es möglich, Systeme zur Fußgängerkennung (z. B. kamerabasierte Systeme) mit dieser Information zu versorgen bzw. zu fusionieren.

Fusionieren bedeutet, dass die Informationen von 2 Sensoren (in diesem Fall Kamera und Kommunikation) zu einem Abbild der Umgebung kombiniert werden und ab dann als eine Information (beispielsweise mit größere Genauigkeit oder mehr Attributen, etc.) weitergereicht werden.

Bei Mobiltelefonen für eine spezielle Personengruppe, z. B. für Kinder oder für Senioren, kann zusätzlich eine Kennung versendet werden, damit die Botschaft eindeutig dieser Personengruppe zugeordnet werden kann und die Warnung an den Fahrer bzw. die Fusion entsprechend angepasst werden kann. So ist z. B. bei Kindern verstärkt mit unvorhersehbarem Verhalten zu rechnen. WLAN und GPS können auch z. B. in der Kleidung oder dem Schulranzen des Fußgängers fest integriert werden, um eine Warnung vor Kindern zu ermöglichen.

Hat das fahrzeugexterne mobile Kommunikationsgerät 45 keine Positionierungseinheit, so sendet es dennoch eine Kennung aus, in diesem Fall allerdings ohne Ortsinformation. Über die Ermittlung der Empfangsfeldstärke im Fahrzeug und die Änderung der Empfangsfeldstärke kann dennoch erkannt werden, wie nahe der Fußgänger etwa dem Fahrzeug ist (evtl. durch Kombination mit einer digitalen Karte). Danach kann eine entsprechende Warnung an den Fahrer oder ein Fahrerassistenzsystem ausgegeben werden.

Durch die Verwendung von Infotainment-Kommunikation, wie sie in Mobiltelefonen vorhanden ist, und die Abänderung dieser Kommunikation auf Softwarebasis kann ein Fußgängerschutz ohne dedizierte zusätzliche Hardware realisiert werden.

Insbesondere kann im Fahrzeug oder im mobilen Kommunikationsgerät 45 bereits vorhandene Infotainment-Hardware für die Sicherheit verwendet werden. Weiterhin kann der WLAN-Standard der mobilen Kommunikationsgeräte 45 für den Fußgängerschutz verwendet werden. Insbesondere ist eine besondere Kennzeichnung von Kindern, Senioren oder anderen ausgewählten Personengruppen möglich. Weiterhin kann eine Fusion von Kommunikation mit Fußgängererkennung stattfinden. Falls das mobile Kommunikationsgerät 45 keine Positionierungseinheit aufweist, kann die Empfangsfeldstärke zur Entfernungsabschätzung verwendet werden.

Fig. 3 zeigt ein Beispiel für eine redundante Datenkommunikation gemäß einem Ausführungsbeispiel der Erfindung. Hierbei werden verschiedene Kommunikationstechniken für Fahrzeug-zu-X Kommunikation zur Erhöhung der Redundanz und Verbesserung der Leistung (Performance) verwendet.

Bei Fahrzeug-zu-X (C2X) Kommunikation kann eine Kommunikationstechnik basierend auf dem WLAN-802.11p Standard verwendet werden. Beispielsweise kann ein dedizierter Kontrollkanal verwendet werden (sog. Dual-Receiver Konzept), oder es kann der Kontrollkanal über ein beispielsweise mittels GPS-synchronisiertes Zeitraster in den Kommunikationskanal eingeflochten werden (sog. Single-Receiver Konzept).

Das Dual-Receiver Konzept bietet den Vorteil eines guten Zeitverhaltens und einer verhältnismäßig hohen Sicherheit, wohingegen das Single-Receiver Konzept verhältnismäßig geringe Kosten verursacht. Das Dual-Receiver Konzept weist eine vergleichsweise geringe Gesamtbandbreite bei C2X auf, die in Europa aktuell nur 30 MHz in Summe für alle Kanäle beträgt.

Über zusätzliche Kommunikationstechniken 301 (z. B. WLAN-802.11a/b/g/n Standard) ist ebenfalls eine Kommunikation zwischen Fahrzeugen oder zwischen Fahrzeug und Infrastruktur bzw. zwischen Fahrzeugen und mobilen Kommunikationseinheiten 45 möglich.

Da die verwendeten Frequenzen oft nicht geschützt sind und damit durch andere Anwendungen gestört sein können, kann bei einem Zweikanalansatz einer der beiden Kanäle über den WLAN-802.11p Standard 301 und der andere über eine zusätzliche Kommunikationstechnik abgewickelt werden.

Bei der zusätzlichen Kommunikationstechnik kann es sich beispielsweise um eine WLAN-802.11a/b/g/n Standard-basierte Kommunikation 31 handeln.

Stehen mehrere zusätzliche Kommunikationstechniken zur Verfügung, können diese parallel verwendet werden, um die Robustheit der Datenübertragung gegenüber Störungen durch andere Anwendungen auf dem gleichen Frequenzband weiter zu erhöhen.

Wesentliche Vorteile der zweiten (üblicherweise deutlich niedrigeren Frequenz) sind die geringere Freiraumdämpfung, also höhere Reichweite bei gleicher Sendeleistung, und die Eigenschaft, dass niedrigere Frequenzen besser um Sichthindernisse herum gebeugt werden.

Zusätzlich verringern die unterschiedlich genutzten Kommunikationstechnologien die Wahrscheinlichkeit, dass beide Kommunikationskanäle gleichzeitig gestört werden oder durch Implementierungsfehler gleichzeitig ausfallen.

Es ist auch möglich, WLAN-802.11p Standard in der Single-Receiver Konfiguration zu benutzen und über die zusätzliche Kommunikationstechnik 31 eine Dual-Receiver Konfiguration parallel dazu aufzubauen. So wird über die geschützte Frequenz von 802.11p die Funktionalität auf jeden Fall sichergestellt und über die zusätzliche Frequenz die Performance (hinsichtlich Zeitverhalten, Priorisierung, Congestion Control ...) verbessert.

Durch die parallele Verwendung des Standards WLAN-802.11p bei 5,9 GHz und einer zusätzlichen Kommunikationstechnik wird eine Redundanz für Sicherheitsanwendungen ermöglicht, die vor allem durch die unterschiedlichen physikalischen Ausbreitungseigenschaften der verwendeten Frequenzen von Vorteil ist. So kann insgesamt auch die Abdeckung verbessert werden und damit die Sicherheit des Gesamtsystems verbessert werden.

Da Störungen der einen Übertragungstechnik durch die andere Übertragungstechnik ausgeglichen werden können, erhöht sich die Übertragungssicherheit.

Der WLAN-802.11p Standard kann als Basis für die C2X-Kommunikation, beispielsweise in Single-Receiver Konfiguration verwendet werden. Bedarfsweise oder bei jedem Datenverkehr kann die zweite oder ggf. auch noch eine dritte oder mehrere zusätzliche Kommunikationstechniken als Kontrollkanal für die C2X-Kommunikation verwendet werden.

Beispielsweise kann einer der Kommunikationskanäle auf UDP oder UDP-Lite (User Datagram Protocol bzw. Lightweight User Datagram Protocol) basieren. User Datagram Protocol (UDP) ist ein minimales, verbindungsloses Netzprotokoll, das zur Transportschicht der Internetprotokollfamilie gehört. Um die Daten, die mit UDP versendet werden, dem richtigen Programm auf dem Zielrechner bzw. der richtigen Untereinheit im Fahrzeug zukommen zu lassen, werden bei UDP sog. Ports verwendet. Dazu wird bei UDP die Portnummer des Dienstes mitgesendet, der die Daten erhalten soll.

An dieser Stelle sei angemerkt, dass der WLAN-802.11p Standard durch eine Ad-hoc Kommunikation und schnellen Verbindungsaufbau ausgezeichnet ist. Handelsübliche WLAN-Router, die den Funkstandard nach 802.11a/b/g/n verwenden, benötigen oft sehr viel längere Aufbauzeiten für die Kommunikation, wodurch die effektive Reichweite reduziert werden kann. In anderen Worten: Da das Fahrzeug sich weiter bewegt, reduziert sich auch der Abstand zum Objekt bis der Verbindungsaufbau abgeschlossen ist. Da erst nach Abschluss des Verbindungsaufbaus Daten ausgetauscht werden können, ist der Abstand nach Verbindungsaufbau als effektive Reichweite zu sehen, welche natürlich u.U. kürzer ausfällt als bei Ad-Hoc Kommunikation.

Alternativ oder zusätzlich zur Änderung des MAC-Layers (wie beispielsweise bei Verwendung des 802.11a/b/g/n Standards) oder zusätzlich hierzu kann eine UDP-basierte Kommunikation erfolgen. Die UDP-Kommunikation bietet insbesondere für Infrastruktur-zu-Fahrzeug Kommunikation Vorteile.

Beispielsweise sendet ein C2X-Teilnehmer mit einer handelsüblichen WLAN-Hardware C2X-Pakete via UDP im Rundruf-Modus (Broadcast-Modus). Diese UDP-Pakete werden auf einem vorher festgelegten Funkkanal (z. B. Kanal 1) und auf einem festgelegten UDP-Port, z. B. 3000, und einer Broadcast-Adresse (IPv4 oder IPv6), z. B. 255.255.255.255, versendet. Mittels einem Qualitätssicherungsverfahren (Quality of Service, QoS) wird sichergestellt, dass die UDP-Datenpakete mit ausreichender Priorität behandelt werden, damit diese in einem vorgegebenen Zeitrahmen auch wirklich gesendet werden können.

Ein Empfänger, der diese speziellen C2X-Botschaften verarbeiten kann, hört immer auf den dezidierten Kanal (z. B. Kanal 1) und dem dezidierten UDP-Port mit, auch wenn keine feste Verbindung zum WLAN Access Point aufgebaut wurde. Zum Mithören kann der Monitormodus verwendet werden, den die meisten WLAN-Treiber unterstützen. Die empfangenen Datenpakete werden nun nach UDP-Paketen mit dem dedizierten UDP-Port und einer besonderen C2X-Kennung im Inhalt gefiltert und nur die Daten aus diesen UDP-Paketen werden an die C2X-Anwendungen weitergereicht.

UDP kann alternativ oder zusätzlich zu der MAC-Layer Anpassung bei Datenpaketen, die über WLAN-802.11a/b/g/n versendet werden, erfolgen.

Der Aufbau des Inhalts der UDP-Pakete kann dem der Pakete entsprechen, die sonst über z. B. WLAN-802.11p Standard versendet/empfangen werden. Auf diese Weise ist es möglich, dass Softwaremodule, die möglicherweise für WLAN-802.11p Standard entwickelt werden (z. B. 1609.2, /3), direkt oder mit geringen Adaptionen übernommen werden können.

Die Verwendung von UDP soll am folgenden Beispiel verdeutlicht werden:
An einer Ampel 202 (siehe Fig. 2) soll der Status der Ampel und Information darüber, wie lange dieser Status noch gültig ist, versendet werden. Die Ampel ist bereits mit einem Access-Point für Consumer WLAN ausgerüstet (z. B. ein Hot-Spot der Telekom). Dieser Access-Point wird nun verwendet, um die C2X-Botschaften mittels UDP zu versenden. Dazu ist keine zusätzliche Hardware notwendig und es sind auch keine Änderungen an der Hot-Spot Hardware notwendig. Fahrzeuge, die mit entsprechenden Empfängern ausgestattet sind, lauschen immer auf z. B. Kanal 1 und filtern die dort gesendeten UDP-Botschaften nach einer Kennung für C2X und verwenden anschließend nur diese Informationen für C2X. Sämtliche sonstige Kommunikation im Consumer WLAN bleibt davon ungestört und funktioniert wie bisher.

Auf diese Weise können C2X-Funktionen mit handelsüblicher WLAN-Funktechnik dargestellt werden, unter Beibehaltung von deren Funktionalität für "normale" Kommunikation. Die Verwendung von UDP kann zu verkürzten Verbindungsaufbauzeiten für C2X-Kommunikation unter Verwendung von handelsüblicher WLAN-Funktechnik führen und somit die Reichweite erhöhen. Die Erhöhung der Reichweite ist hierbei im Vergleich zu handelsüblicher WLAN-Technik mit Verbindungsaufbau zu verstehen.

Insbesondere sind keine oder nur minimale Änderungen am Sender notwendig. Der Empfänger weicht nur geringfügig von bereits erhältlichen Empfängern ab.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Entscheiden über die Weiterübertragung von über eine WLAN- Verbindung (30) von einem Empfänger (20) seitens eines Fahrzeugs (21) empfangenen Daten-Frames (31), wobei anhand eines in einem empfangenen Daten-Frame (31) angegebenen Frame-Typs (16: "2"; "3") entschieden wird, an welche Einrichtung (22; 23) Daten (33) des Daten-Frames (31) übertragen werden und die Daten zur Erzeugung eines Warnsignals in dem Fahrzeug (21) verwendbar sind,
**dadurch gekennzeichnet,**
**dass** die Daten (33) von einer mobilen Sendeeinrichtung (45) eines Fußgängers an den Empfänger (20) gesendet werden und anhand nur eines in einem empfangenen Daten-Frame (31) angegebenen Frame-Typs (16: "3") entschieden wird, an welche Einrichtung (22; 23) der Daten-Frame (31) übertragen wird und die Daten zur Erzeugung eines Warnsignals an ein Sicherheitssystem des Fahrzeuges weitergegeben wird und in Abhängigkeit von zumindest dem Frame-Typ (16) entschieden wird, ob die Daten (33) an eine C2X-Daten verarbeitende Einrichtung (22) oder eine andere Daten verarbeitende Einrichtung (23) übergeben werden.

2. Verfahren nach einem der vorhergehenden Ansprüche, **dadurch gekennzeichnet, dass** in Abhängigkeit von zumindest dem Frame-Typ (16) entschieden wird, ob die Daten (33) an eine C2X-Daten verarbeitende Einrichtung (22) oder eine andere Daten verarbeitende Einrichtung (23) übergeben werden.

3. Verfahren nach einem der vorhergehenden Ansprüche, **dadurch gekennzeichnet, dass** die Daten (33) an die C2X-Daten verarbeitende Einrichtung (22) oder andere Einrichtung (23) durch eine Ethernet-Schnittstelle oder Software-Schnittstelle übergeben werden.

4. Verfahren nach einem der vorhergehenden Ansprüche, **dadurch gekennzeichnet, dass** ein Daten-Frame mit einem Frame-Typ ("3") an eine C2X-Einrichtung (22) übergeben wird.

5. Verfahren nach einem der vorhergehenden Ansprüche, **dadurch gekennzeichnet, dass** der Empfänger (20) die Daten über eine Luftschnittstelle gemäß einem WLAN-802.11 Standard, insbesondere 802.11a oder 802.11b oder 802.11g oder 802.11n erhält.

6. Verfahren nach einem der vorhergehenden Ansprüche,
wobei die Daten (33) zusätzlich auch auf Basis einer weiteren Kommunikationstechnik von dem Empfänger (20)empfangen werden.

7. Verfahren nach einem der vorhergehenden Ansprüche,
wobei Daten-Frames (31) über eine WLAN- Verbindung (30) an einen Empfänger (45) gesendet werden,
wobei Daten-Frames (31) mit Daten (33) von einer C2X-Daten verarbeitenden Einrichtung (C2X Controller Modul 22) mit zumindest einer dies repräsentierenden Frame-Typ-Kennzeichnung (16) versehen werden,
während Daten-Frames (31) mit Daten (33) von einer anderen (23) als der C2X-Daten verarbeitenden Einrichtung (22) mit einer anderen Frame-Typ-Kennzeichnung (16) als der für von der C2X-Daten verarbeitenden Einrichtung (22) stammende Daten verwendeten Frame-Typ-Kennzeichnung (16) versehen werden, bevor sie gesendet (an 45) werden;
wobei es sich bei dem Empfänger (45) um eine mobile Sendeeinrichtung (45) eines Fußgängers handelt; und
wobei die Daten Informationen über eine Position des Fahrzeugs aufweisen.

8. Verfahren nach einem der vorhergehenden Ansprüche,
wobei die Daten (33) zusätzlich auch auf Basis einer weiteren Kommunikationstechnik an den Empfänger (45)gesendet werden.

9. Verfahren nach einem der vorhergehenden Ansprüche,
wobei die weitere Kommunikationstechnik auf dem WLAN-802.11p Standard basiert.

## Claims

1. Method for deciding about the further transmission of data frames (31) received by a receiver (20) in a vehicle (21) via a WLAN connection (30), wherein a frame type (16: "2"; "3") indicated in a received data frame (31) is used to decide about that device (22; 23) to which data (33) in the data frame (31) are transmitted and the data can be used to produce a warning signal in the vehicle (21),
**characterized in that**
the data (33) are sent to the receiver (20) by a mobile transmission device (45) of a pedestrian and only one frame type (16: "3") indicated in a received data frame (31) is used to decide about that device (22; 23) to which the data frame (31) is transmitted and the data are forwarded to a security system of the vehicle in order to produce a warning signal and at least the frame type (16) is taken as a basis for deciding whether the data (33) are transferred to a device (22) processing C2X data or to a device (23) processing other data.

2. Method according to one of the preceding claims, **characterized in that** at least the frame type (16) is taken as a basis for deciding whether the data (33) are transferred to a device (22) processing C2X data or to a device (23) processing other data.

3. Method according to one of the preceding claims,
**characterized in that** the data (33) are transferred to the device (22) processing C2X data or to the other device (23) by an Ethernet interface or software interface.

4. Method according to one of the preceding claims,
**characterized in that** a data frame with a frame type ("3") is transferred to a C2X device (22).

5. Method according to one of the preceding claims,
**characterized in that** the receiver (20) receives the data via an air interface on the basis of a WLAN-802.11 standard, particularly 802.11a or 802.11b or 802.1g or 802.lln.

6. Method according to one of the preceding claims, wherein the data (33) are additionally also received by the receiver (20) on the basis of a further communication technique.

7. Method according to one of the preceding claims, wherein data frames (31) are sent to a receiver (45) via a WLAN connection (30),
wherein data frames (31) with data (33) from a device processing C2X data (C2X controller module 22) are provided with at least one frame type identifier (16) representing this,
whereas data frames (31) with data (33) from a device (22) processing data (23) other than the C2X data are provided with a different frame type identifier (16) than the frame type identifier (16) used for data originating from the device (22) processing C2X data, before they are sent (to 45);
wherein the receiver (45) is a mobile transmission device (45) of a pedestrian; and
wherein the data contain information about a position of the vehicle.

8. Method according to one of the preceding claims,
wherein the data (33) are additionally also sent to the receiver (45) on the basis of a further communication technique.

9. Method according to one of the preceding claims,
wherein the further communication technique is based on the WLAN-802.11p standard.

## Revendications

1. Procédé de décision concernant la retransmission de trames de données (31) reçues par le biais d'une liaison WLAN (Réseau Local Sans Fil) (30) par un récepteur (20) de la part d'un véhicule (21), dans lequel il est décidé à l'aide d'un type de trame indiqué (16 : « 2 » ; « 3 ») dans une trame de données reçue (31) à quel dispositif (22 ; 23) les données (33) de la trame de données (31) seront transmises et les données pourront être utilisées pour générer un signal d'avertissement dans le véhicule (21),
**caractérisé en ce que**
les données (33) sont envoyées au récepteur (20) par un dispositif émetteur mobile (45) d'un piéton et il est décidé seulement à l'aide d'un type de trame indiqué (16 : « 3 ») dans une trame de données reçue (31) à quel dispositif (22 ; 23) la trame de données (31) est transmise et les données sont retransmises à un système de sécurité du véhicule pour générer un signal d'avertissement et il est décidé en fonction au moins du type de trame (16), si les données (33) sont transmises à un dispositif (22) traitant des données C2X ou à un autre dispositif (23) traitant des données.

2. Procédé selon l'une des revendications précédentes, **caractérisé en ce qu'**en fonction au moins du type de trame (16) il est décidé si les données (33) sont transmises à un dispositif (22) traitant des données C2X ou à un autre dispositif (23) traitant des données.

3. Procédé selon l'une des revendications précédentes,
**caractérisé en ce que** les données (33) sont transmises au dispositif (22) traitant des données C2X ou un autre dispositif (23) par une interface Ethernet ou une interface de logiciel.

4. Procédé selon l'une des revendications précédentes,
**caractérisé en ce qu'**une trame de données est transmise avec un type de trame (« 3 ») à un dispositif C2X (22).

5. Procédé selon l'une des revendications précédentes,
**caractérisé en ce que** le récepteur (20) reçoit les données par le biais d'une interface aérienne conformément à une norme WLAN-802.11, en particulier 802.11a ou 802.11b ou 802.11g ou 802.11n.

6. Procédé selon l'une des revendications précédentes, les données (33) étant reçues également en plus par le récepteur (20) sur la base d'une autre technique de communication.

7. Procédé selon l'une des revendications précédentes, des trames de données (31) étant envoyées par le biais d'une liaison WLAN (30) à un récepteur (45),
les trames de données (31) avec les données (33) d'un dispositif traitant des données C2X (Module de contrôleur C2X, 22) étant dotées d'au moins une identification de type de trame (16) représentant celui-ci,
alors que les trames de données (31) avec des données (33) d'un autre (23) dispositif que celui (22) traitant les données C2X sont dotées d'une autre identification de type de trame (16) que l'identification de type de trame (16) utilisée pour les données provenant du dispositif (22) traitant les données C2X avant qu'elles ne soient envoyées (à 45) ;
dans lequel il s'agit en ce qui concerne le récepteur (45) d'un dispositif émetteur mobile (45) d'un piéton ; et
les données comportant des informations relatives à une position du véhicule.

8. Procédé selon l'une des revendications précédentes, les données (33) étant en plus envoyées au récepteur (45) également sur la base d'une autre technique de communication.

9. Procédé selon l'une des revendications précédentes, l'autre technique de communication étant basée sur la norme WLAN-802.11p.
